(19) Europäisches Patentamt
European Patent Office
Office européen des brevets

(11) **EP 4 614 622 A1**

(12) **EUROPEAN PATENT APPLICATION**
published in accordance with Art. 153(4) EPC

(43) Date of publication:
**10.09.2025 Bulletin 2025/37**

(21) Application number: **23885704.9**

(22) Date of filing: **30.10.2023**

(51) International Patent Classification (IPC):
*H01M 4/62* (2006.01)      *C09C 1/44* (2006.01)
*C09D 1/00* (2006.01)      *C09D 5/02* (2006.01)
*C09D 5/04* (2006.01)      *C09D 5/24* (2006.01)
*C09D 17/00* (2006.01)      *C09D 101/04* (2006.01)
*C09D 109/00* (2006.01)      *H01M 4/04* (2006.01)
*H01M 4/139* (2010.01)

(52) Cooperative Patent Classification (CPC):
**C09C 1/44; C09D 1/00; C09D 5/02; C09D 5/04;
C09D 5/24; C09D 17/00; C09D 101/04;
C09D 109/00; H01M 4/04; H01M 4/139; H01M 4/62;**
Y02E 60/10

(86) International application number:
**PCT/JP2023/039049**

(87) International publication number:
**WO 2024/095949 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.10.2022  JP 2022175141
31.10.2022  JP 2022175143**

(71) Applicant: **MITSUBISHI PENCIL COMPANY,
LIMITED**
**Tokyo 140-8537 (JP)**

(72) Inventors:
• **HAYAKAWA, Takayuki**
**Tokyo 140-8537 (JP)**
• **MATSUSHIMA, Ryosuke**
**Fujioka-shi, Gunma 375-8501 (JP)**
• **SAKUMA, Satoshi**
**Fujioka-shi, Gunma 375-8501 (JP)**
• **ABE, Hiroshi**
**Fujioka-shi, Gunma 375-8501 (JP)**

(74) Representative: **Vossius & Partner
Patentanwälte Rechtsanwälte mbB
Siebertstrasse 3
81675 München (DE)**

(54) **COATING LIQUID FOR ELECTRODE FORMATION**

(57)      [Problem] Provided is a carbon nanotube dispersion having excellent dispersibility.

[Solution] A carbon nanotube dispersion includes at least carbon nanotubes, oxidized cellulose nanofibers, and water, wherein, of the oxidized cellulose nanofibers, 85% or more of the oxidized cellulose nanofibers have a fiber length of 50 to 250 nm.

**EP 4 614 622 A1**

**Description**

Technical Field

The present invention relates to a coating liquid for electrode formation, the coating liquid serving as a production raw material of an electrode of a lithium ion battery or the like.

Background Art

As electric vehicles became widespread and as mobile devices such as cellular phones and notebook computers became smaller and lighter and acquired higher performance, secondary batteries having high energy densities and higher capacities of the secondary batteries have been demanded. In such circumstances, many devices use lithium ion secondary batteries using non-aqueous electrolytes because of their characteristics such as high energy density and high voltage. Efficient formation of an electrically conductive network with good electrical conductivity performance and a reduced electrode resistance by using a small amount of a carbon nanotube dispersion or the like by using the carbon nanotube dispersion or the like as a negative electrode material and/or a positive electrode material used for these lithium ion secondary batteries and the like have been studied. Recently, a carbon nanotube dispersion using cellulose nanofibers as a dispersing agent and the like have been also known.

For example, Patent Document 1 describes a carbon nanotube dispersion containing carbon nanotubes, cellulose nanofibers, and a dispersion medium to provide a carbon nanotube dispersion that suppresses aggregation of carbon nanotubes and that exhibits high dispersion stability, the cellulose nanofiber being fine cellulose fibers having a maximum fiber size of 1000 nm or less and a number average fiber size of 2 nm or more and 150 nm or less, some hydroxy groups of the fine cellulose fibers being substituted with at least one functional group selected from the group consisting of a carboxyl group and an aldehyde group, and a cellulose I type crystal structure being included.

Patent Document 2 describes a nanomaterial composition containing a dispersion medium and cellulose nanofibers and carbon nanotubes dispersed in the dispersion medium to provide a nanomaterial composition that can improve a surface hardness when a molded article is formed.

Furthermore, Patent Document 3 describes a dispersion stabilizer for an electrode coating liquid to provide a composition containing a dispersion stabilizer for an electrode coating liquid of a power storage device, the dispersion stabilizer exhibiting excellent dispersion stability of an electrode active material and an electrically conductive material and being capable of producing a homogeneous electrode even when a dispersing device with a weak shear force is used. The dispersion stabilizer for an electrode coating liquid of a power storage device contains cellulose fibers that has (a) a number average width of a short width of 2 to 200 nm, (b) an aspect ratio of 7.5 or more and 250 or less, and (C) a cellulose I type crystal, in which a degree of crystallinity is 70% or more and 95% or less, and a dispersion for electrode coating further contains (d) an anionic functional group, and (e) the anionic functional group being a carboxyl group, for which the content is 1.2 to 2.5 mmol/g.

Furthermore, Patent Document 4 describes a binding agent composition for an electrode to provide a binding agent composition for an electrode that can provide an electrode having a high durability even in a case where an active material with a large volume change is used, an electrode for a power storage device produced by using the binding agent composition, and a power storage device including the electrode for a power storage device. The binding agent composition for an electrode contains (A) at least one type or two or more types of polymer components selected from the group consisting of a fluorine-based polymer, a butadiene-based polymer, and a thermoplastic elastomer, (B) a fibrous nanocarbon material having an average fiber size of 0.5 nm or more and 20 nm or less and a fiber length of 0.5 $\mu$m or more and 1 mm or less, (C) a cellulose material, (D) nanocellulose fibers, and (E) water, a mass ratio of the (A) and the (B) described above satisfies (A)/(B) = 60/40 to 98/2.

Patent Document 5 describes a dispersion containing a dispersion medium, metal-containing oxidized cellulose nanofibers containing a metal in a form of a salt other than sodium, and single-walled nanotubes. As oxidized cellulose nanofibers, carboxylated cellulose nanofibers obtained by TEMPO oxidation are described; however, the properties thereof are not described. For the TEMPO oxidation of the cellulose nanofibers, the oxidation reaction is typically performed as complete as possible.

Furthermore, "Progress report for outsourced performance evaluation of cellulose nanofiber-applied products in 2017 (entrusted business from Ministry of the Environment in 2017) (identification of issues for practical use of lithium ion battery for vehicle with start-stop system to which cellulose nanofibers have been applied) , March 16, 2018: DKS Co., Ltd.", which is Non-Patent Document 1, describes that, by applying cellulose nanofibers to electrode production of a lithium ion battery, a positive electrode coating liquid can be made water-based, significant improvement is found in battery deterioration accompanying charging and discharging, and discharge capacity retention rate in a cycle is improved.

However, the carbon nanotube dispersions and the like of these Patent Documents 1 to 5 and Non-Patent Document 1 and the like still have problems such as reduction in dispersibility over time and difficulty in providing stability and electrical conductivity performance in a compatible manner at high levels. In particular, problems exist in that, at the time of mixing cellulose nanofibers, time is required for dispersing process to prevent insufficient dispersing and the resistance value of a battery becomes high because a large amount of a binder is contained to improve durability of the battery, and thus further improvement is desired currently.

Citation List

Patent Document

Patent Document 1: JP 2017-206412 A (e.g., Claims, Examples)
Patent Document 2: JP 2020-019924 A (e.g., Claims, Examples)
Patent Document 3: JP 2010-254546 A (e.g., Claims, Examples)
Patent Document 4: JP 2007-169120 A (e.g., Claims, Examples)
Patent Document 5: JP 2021-057271 A (e.g., Claims, Examples)
Non-Patent Document 1: Progress report for outsourced performance evaluation of cellulose nanofiber-applied products in 2017 (entrusted business from Ministry of the Environment in 2017) (identification of issues for practical use of lithium ion battery for vehicle with start-stop system to which cellulose nanofibers have been applied), March 16, 2018, DKS Co., Ltd.

Summary of Invention

Technical Problem

The present invention is to solve the known issues described above and the like, and an object of the present invention is to provide a carbon nanotube dispersion having excellent dispersibility. In particular, the present invention is to provide a means to solve the issues of insufficient dispersion due to aggregation of carbon nanotubes, and a long period of time required for dispersing process to completely disperse the carbon nanotubes, when the carbon nanotubes are dispersed in a dispersion medium such as water.

Solution to Problem

As a result of diligent research to solve the problems described above, the inventors of the present invention found that the target carbon nanotube dispersion can be achieved by a carbon nanotube dispersion containing at least carbon nanotubes, oxidized cellulose nanofibers having specific physical properties, and water, and thus completed the present invention.

That is, the coating liquid of the present invention is a coating liquid for electrode layer formation, which is a carbon nanotube dispersion coating liquid including at least carbon nanotubes, oxidized cellulose nanofibers, an active material, a binder, and water,
wherein the oxidized cellulose nanofibers have a peak height ratio (C=O/C-O) of a peak height attributed to C=O (approximately 1610 cm$^{-1}$) to a peak height attributed to C-O (approximately 1062 cm$^{-1}$) of 0.70 or less, or a peak height ratio (C=O/O-H) of a peak height attributed to C=O (approximately 1610 cm$^{-1}$) to a peak height attributed to O-H (approximately 3340 cm$^{-1}$) of 1.35 or less in an infrared spectrum.

Another invention is the coating liquid described above, wherein, of the oxidized cellulose nanofibers, 85% or more of oxidized cellulose nanofibers have a fiber length of 50 to 250 nm.

Furthermore, another invention is the coating liquid having structural resilience.

The structural resilience of the coating liquid of the present invention can be confirmed by exhibition of recovery of viscosity when the coating liquid exhibits a thixotropic property. In particular, the structural resilience is demonstrated by a ratio of a slope for speed decrease with respect to a slope for speed increase in viscosity measurement chart of 0.75 or more when the shear speed makes a round-trip change from 2.2 s$^{-1}$ to 1000 s$^{-1}$ in viscosity measurement by a rotational viscometer.

The coating liquid of the present invention preferably contains a synthetic rubber as a binder.

By using the coating liquid of the present invention, a composition for an electrode used in an electrode for a lithium battery can be suitably produced.

It is known that carboxylated oxidized cellulose nanofibers can be obtained by subjecting cellulose nanofibers to TEMPO oxidation; however, typically, the TEMPO oxidation reaction is performed as complete as possible. No controlling is performed to allow the oxidized cellulose nanofibers to have specific physical properties by adjusting the TEMPO oxidation reaction. In contrast, in the present invention, it is important that the TEMPO oxidation reaction of the cellulose nanofibers is not performed completely, to allow the oxidized cellulose nanofibers to have specific physical properties.

Advantageous Effects of Invention

According to the present invention, a coating liquid for electrode layer formation that can achieve a uniform film having a predetermined electrical conductivity with good coatability is provided.

The object and effects of the present invention can be recognized and obtained especially using the components and combinations indicated in the claims. Both general explanation described above and detailed explanation described below are exemplary and explanatory and do not limit the present invention described in claims.

Brief Description of Drawings

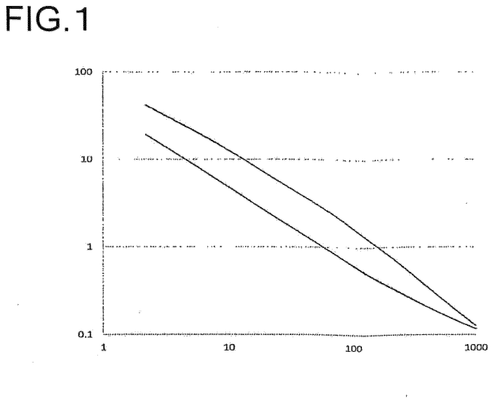

FIG. 1 is a shear speed-viscosity chart for a case where a shear speed by a disk of a rotational viscometer makes a round-trip change from 2.2 s$^{-1}$ to 1000 s$^{-1}$ in viscosity measurement of a coating liquid of the present invention. The upper line indicates the speed increase from left to right, and the bottom line indicates the speed decrease from right to left.

Description of Embodiments

Hereinafter, embodiments of the present invention will be described in detail. Note that the technical scope of the present invention is not limited to the embodiment described below but includes the invention described in Claims and equivalents thereof. In addition, the present invention can be implemented based on the contents disclosed in the present specification and technical common knowledge (including design matters and obvious matters) in the art.

Carbon Nanotube Dispersion

The carbon nanotube dispersion of the present invention contains at least carbon nanotubes, specific oxidized cellulose nanofibers, and water.

The oxidized cellulose nanofibers (CeNFs) of the present invention are suitably used as a dispersing agent of the carbon nanotube dispersion.

Carbon Nanotube (CNT)

The carbon nanotube (CNT) used in the present invention is not particularly limited as long as the carbon nanotube has a tubular shape substantially obtained by winding a one sheet face of graphite, and a single-walled CNT obtained by winding one sheet face of graphite into a single layer and a multi-walled CNT obtained by winding graphite into multiple layers such as two layers or three or more layers can be used. And examples of the form of the carbon nanotube include graphite whiskers, filamentous carbon, graphite fibers, ultrafine carbon tubes, carbon tubes, carbon fibrils, carbon microtubes, and carbon nanofibers. However, the form is not limited to these and may be one type of these or a combination of two or more types of these (hereinafter, simply referred to as "at least one type").

Furthermore, from the viewpoints of viscosity of dispersion, electrical conductivity, and stability, the average outer diameter of the carbon nanotubes is preferably 1 nm or more and 90 nm or less, more preferably 3 nm or more and 30 nm or less, and even more preferably 3 nm or more and 15 nm or less.

In the present invention, the average outer diameter of the carbon nanotubes refers to an arithmetic mean value of n, which is an adequate number, of external forms measured by using an image with magnification of 100000 times or more using a transmission electron microscope. Furthermore, the purity of the carbon nanotube used in the present invention is preferably from 90 to 100 mass%, and particularly preferably from 95 to 100 mass%. Note that the purity of carbon nanotube is calculated based on an impurity content by taking the ash content measured in accordance with JIS K 1469 or JIS K 6218 as the impurity.

Specific examples of the carbon nanotube (CNT) that can be used include at least one type of NC7000 (average outer diameter 10 nm) available from Nanocyl SA, Baytubes C150P (average outer diameter 11 nm) available from Bayer, FloTube 9000 (average outer diameter 19 nm), FloTube 7320 (average outer diameter 9 nm), FloTube 7010 (average outer diameter 9 nm), FloTube 6810 (average outer diameter 8 nm), FloTube 6120 (average outer diameter 8 nm), FloTube 6100 (average outer diameter 8 nm), and FloTube 2020 (average outer diameter 4 nm) available from Cnano, MEIJOeDIPS EC2.0 (average outer diameter 2.0 nm) available from Meijo Nano Carbon K.K., KORBON-A7 (average outer diameter 1.2 nm) available from KORBON Co., Ltd., NFT-7 (average outer diameter 30 nm) available from Koatsu Gas Kogyo Co., Ltd., or NFT-15 (average outer diameter 30 nm) available from Koatsu Gas Kogyo Co., Ltd.

The content of these carbon nanotubes (CNT) can be set to a preferred content based on the use and is not particularly limited.

For example, in a case of use in an electroconductive paste, an electrode paste for a secondary battery, or an electrode for a secondary battery, from the viewpoint of providing high stability and electrical conductivity performance in a compatible manner and from the viewpoint of viscosity during dispersion production, the content thereof is preferably 0.1 to 15.0 mass%, more preferably 0.1 to 10.0 mass%, even more preferably 0.5 to 8.0 mass%, 1.0 to 6.0 mass%, and particularly preferably 2.0 to 5.0 mass%, with respect to the total amount of the dispersion.

By setting the content of the carbon nanotubes (CNTs) to 0.1 mass% or more, adequate electrical conductivity can be ensured. On the other hand, by setting the content to 15.0 mass% or less, stability of the dispersion and excellent electrical conductivity can be ensured.

Oxidized Cellulose Nanofiber (CeNF)

The oxidized cellulose nanofibers (CeNFs) of the present invention are used as a dispersing agent of the carbon nanotube dispersion and are oxidized cellulose nanofibers satisfying the following requirements.

The oxidized cellulose nanofibers are preferably oxidized cellulose nanofibers having a carboxylic acid group (COOH) due to selective oxidation of a hydroxy group at position 6 of a glucose unit. The carboxylic acid group may be neutralized into a carboxylate group (COOX, X indicates a cation forming a salt with the carboxylic acid herein) . It can be confirmed that the oxidized cellulose is an oxidized cellulose having a selectively oxidized hydroxy group at position 6 of a glucose unit based on , for example, a $^{13}$C-NMR chart. Note that the oxidized cellulose nanofibers may contain an aldehyde group or a ketone group together with the carboxylic acid group and/or the carboxylate group, however, preferably contain substantially no aldehyde group and ketone group.

When the oxidized cellulose nanofibers to be used contains a certain amount of remaining alcoholic hydroxy groups, a stronger hydrogen bond is formed between molecules, and structural resilience is achieved. Furthermore, when the composition is applied, the viscosity during application decreases and uniform application is facilitated, and the viscosity returns after the application, and the uniform state can be maintained thereafter. Furthermore, when the viscosity is recovered (increased) after the application, raw materials are less likely to aggregate during drying, and thus warping is less likely to occur. The alcoholic hydroxy group is detected in an infrared spectrum.

In an infrared spectrum, a peak height ratio (C=O/C-O) of a peak height attributed to C=O (approximately 1610 cm$^{-1}$) to a peak height attributed to C-O (approximately 1062 cm$^{-1}$) is 0.70 or less or a peak height ratio (C=O/O-H) of a peak height attributed to C=O (approximately 1610 cm$^{-1}$) to a peak height attributed to O-H (approximately 3340 cm$^{-1}$) is 1.35 or less.

When the peak height ratio (C=O/C-O) described above is 0.70 or less or the peak height ratio (C=O/O-H) described above is 1.35 or less, the oxidized cellulose can be used as a TEMPO oxidized cellulose having good dispersibility of carbon nanotubes.

In contrast, when the peak height ratio (C=O/C-O) described above is more than 0.70 or the peak height ratio (C=O/O-H) described above is more than 1.35, oxidation is proceeded excessively, and thus the dispersibility of carbon nanotubes is negatively affected.

The peak height ratio (C=O/C-O) described above is preferably 0.25 or more and 0.70 or less, or the peak height ratio (C=O/O-H) described above is more preferably 0.45 or more and 1.35 or less.

In the present invention, the peak height ratio (C=O/C-O) described above of 0.70 or less or the peak height ratio (C=O/O-H) described above of 1.35 or less is preferred. Although the peak may be affected by noise due to mixing of impurities derived from raw materials during analysis, one of the peak height ratios described above is required to be satisfied.

Oxidized cellulose nanofibers having the peak height ratio (C=O/C-O) described above of 0.70 or less and the peak height ratio (C=O/O-H) described above of 1.35 or less is more preferred from the viewpoint of dispersibility of carbon nanotubes.

The peak height ratio (C=O/C-O) described above of 0.70 or less or the peak height ratio (C=O/O-H) described above of 1.35 or less can be achieved by controlling the carboxyl group amount by adjusting the added amount of a co-oxidizing agent used in oxidation process of cellulose fibers or the reaction period at the time of production described below.

The infrared spectrum of the oxidized cellulose nanofibers can be measured by using an infrared spectrometer. In the present invention, the oxidized cellulose nanofibers are irradiated with infrared radiation to measure the infrared absorption intensity at a wavelength characteristic to each functional group, and the ratio of the absorption intensities is compared as the peak height ratio.

Regarding the fiber lengths of the oxidized cellulose nanofibers contained in the coating liquid, preferably 85% or more of oxidized cellulose nanofibers with respect to the entire oxidized cellulose nanofibers have fiber lengths of 50 nm to 250 nm, and more preferably 30% or more of oxidized cellulose nanofibers with respect to the entire oxidized cellulose nanofibers have fiber lengths of 100 nm to 150 nm.

Furthermore, the oxidized cellulose nanofibers to be blended in the carbon nanotube dispersion preferably have a number average fiber length L of 100 nm to 150 nm and a ratio (LI/L) of a length-weighted average fiber length LI to the number average fiber length L is preferably 1.0 to 1.4.

The fiber lengths of the oxidized cellulose nanofibers can be measured by a transmission electron microscope (TEM). From the TEM image, a histogram of the fiber lengths of the oxidized cellulose nanofibers is created, for example, in units of 50 nm, and the distribution of the fiber lengths can be evaluated by calculating a proportion of oxidized cellulose nanofibers having fiber lengths in a range of 50 nm to 250 nm or oxidized cellulose nanofibers having fiber lengths in a range of 100 nm to 150 nm with respect to the entire oxidized cellulose nanofibers. Furthermore, based on the histogram of the fiber lengths, the number average fiber length L, the length-weighted average fiber length LI, and the ratio (LI/L) of the length-weighted average fiber length LI to the number average fiber length L can be determined.

When the fiber lengths of the oxidized cellulose nanofibers are in the range described above, good dispersibility of the carbon nanotubes is achieved. Although the mechanism is not clear, it is presumed to be related to permeability of the oxidized cellulose nanofibers to the carbon nanotubes.

The content of the carboxylic acid group of the oxidized cellulose nanofibers described above (hereinafter, referred to as a carboxyl group amount) is preferably adjusted to 0.5 mmol/g to 3.0 mmol/g with respect to an absolute dry mass of the cellulose nanofibers. In a case where the carboxyl group amount described above is in the range described above, good dispersibility is achieved when a coating liquid for an electrode material is produced by using the coating liquid.

For the measurement of the carboxyl group amount of the oxidized cellulose nanofibers described above, for example, 60 mL of a 0.5 to 1 mass% slurry is prepared using a cellulose sample for which the dry mass is precisely weighed, the pH is adjusted to approximately 2.5 using a 0.1 M aqueous hydrochloric acid solution, and then 0.05 M of aqueous sodium hydroxide solution is added dropwise to perform electric conductivity measurement. The measurement is continued until the pH becomes approximately 11. Based on the sodium hydroxide amount (V) consumed in the neutralization stage of weak acid, in which change in the electric conductivity is gradual, the carboxyl group amount can be determined by the following Equation (2).

```
Carboxyl group amount (mmol/g) = V (mL) × [0.05/cellulose mass] ...
(2)
```

Note that the adjustment of the carboxyl group amount can be performed by controlling the factors such as the added amount of a co-oxidizing agent used in oxidation process of cellulose fibers or the reaction period, as described below.

The oxidized cellulose nanofibers described above can be obtained by the production method including an oxidation reaction process (1) of obtaining a reaction product by using natural cellulose fibers as raw materials and an N-oxyl compound as an oxidation catalyst in water, and allowing a co-oxidizing agent to act to oxidize the natural cellulose fibers, a purification process (2) of obtaining a water-impregnated reaction product by removing impurities, and a dispersing process (3) of dispersing the water-impregnated reaction product in a solvent.

(1) Oxidation Reaction Process

After the natural cellulose fibers and the N-oxyl compound are dispersed in water (dispersion medium), a co-oxidizing agent is added to initiate a reaction. During the reaction, a co-oxidizing agent is added while the pH is maintained at 10 to 11 by adding 0.5 M of aqueous sodium hydroxide solution dropwise. Note that the co-oxidizing agent does not refer to a substance that directly oxidize the cellulose hydroxy group, but refers to a substance that oxidizes the N-oxyl compound used as the oxidation catalyst.

The natural cellulose fibers described above mean purified cellulose fibers isolated from a biosynthesis system of cellulose, such as those of a plant, an animal, or gel produced by bacteria. More specific examples thereof include needle-leaf tree-based pulp, large-leaf tree-based pulp, cotton-based pulp such as cotton linter and cotton lint, non-wood-based pulp such as straw pulp and bagasse pulp, bacterial cellulose fibers (BC), cellulose fibers isolated from ascidian, and cellulose fibers isolated from seaweed. These may be used alone or in a combination of two or more types. Among these, needle-leaf tree-based pulp, broad-leaf tree-based pulp, cotton-based pulp such as cotton linter and cotton lint, and non-wood-based pulp such as straw pulp and bagasse pulp are preferred.

The natural cellulose fibers described above are preferred because reaction efficiency and productivity can be enhanced by subjecting the natural cellulose fibers to a treatment that increases the surface area, such as beating. Furthermore, use of natural cellulose fibers that have been stored without drying (never dried) after isolation and purification as the natural cellulose fibers described above is preferred because reaction efficiency is enhanced and the number average fiber size after micronization treatment can be made small due to the state in which a bundle of microfibrils is readily swollen.

As the cellulose raw material, a regenerated cellulose spun after cellulose is dissolved in a solvent such as cuprammonium solution or a morpholine derivative, and a minute cellulose obtained by depolymerizing cellulose by subjecting the cellulose raw material described above to hydrolysis, alkaline hydrolysis, enzymatic decomposition, blasting treatment, and mechanical treatment by vibratory ball mill are particularly preferred.

The dispersion medium of the natural cellulose fibers in the reaction described above is water, and the natural cellulose fiber concentration in the aqueous reaction solution can be arbitrarily chosen as long as adequate dispersion of a reagent (natural cellulose fibers) is allowable. Typically, the concentration is approximately 5% or less with respect to the mass of the aqueous reaction solution; however, the reaction concentration can be increased by use of a device with a strong mechanical mixing power.

Furthermore, examples of the N-oxyl compound described above include a compound having a nitroxy radical that is typically used as an oxidation catalyst. The N-oxyl compound described above is preferably a water-soluble compound and, in particular, preferably a piperidine nitroxy oxy radical, and particularly preferably 2,2, 6, 6-tetramethylpiperidinoxy radical (TEMPO) or 4-acetamide-TEMPO. Addition of the N-oxyl compound described above is not particularly limited as long as it is in a catalyst amount that allows oxidation of the cellulose that serves as the raw material. For example, the amount is preferably 0.01 to 10 mmol, more preferably 0.02 to 1 mmol, and even more preferably 0.05 to 0.5 mmol, with respect to 1 g of absolute dry cellulose. Furthermore, the amount is preferably approximately 0.1 to 4 mmol/L with respect to the reaction system.

Examples of the co-oxidizing agent described above include a hypohalous acid or a salt thereof, a halous acid or a salt thereof, a perhalogen acid and a salt thereof, hydrogen peroxide, and perorganic acid. These may be used alone or in a combination of two or more types. Among these, a hypohalous acid alkali metal salt such as sodium hypochlorite and sodium hypobromite is preferred. In a case where the sodium hypochlorite described above is used, from the viewpoint of the reaction rate, the reaction is preferably proceeded in the presence of an alkali metal bromide such as sodium bromide. The added amount of the alkali metal bromide described above is approximately 1 to 40 times, and preferably approximately 10 to 20 times, the molar amount of the N-oxyl compound described above.

The pH of the aqueous reaction solution described above is preferably maintained in a range of approximately 8 to 11. The temperature of the aqueous solution is selected from a range of approximately 4 to 40°C. To obtain a desired carboxyl group amount and the like, the degree of oxidation is controlled by the added amount of the co-oxidizing agent and the reaction period. The reaction period of the oxidation reaction can be appropriately set depending on the degree of the oxidation and is typically 0.5 to 6 hours and, for example, approximately 1 to 4 hours. Furthermore, the oxidation reaction may be performed in two separate stages. For example, by oxidizing oxidized cellulose obtained by filtering after completion of the reaction of the first stage again under the same or different reaction conditions, oxidation can be efficiently performed without reaction inhibition caused by sodium chloride generated as a secondary product in the reaction of the first stage.

In addition to these, by controlling factors such as the added amount of the co-oxidizing agent and the pH of the aqueous reaction solution, the degree of oxidation and hydrolysis of the cellulose molecule can be controlled, and physical properties of the oxidized cellulose nanofibers can be arbitrarily set. Usually, for the TEMPO oxidation of the cellulose nanofibers, the oxidation reaction is performed as complete as possible. However, in the present invention, it is important that the TEMPO oxidation is not proceeded excessively to allow the oxidized cellulose nanofibers to have specific physical properties described above.

(2) Purification Process

Next, purification is performed to remove an unreacted co-oxidizing agent (e.g., hypochlorous acid), various byproducts, and the like. Because, typically, the reaction product fibers are not dispersed separately in the nanofiber unit at this stage, a dispersion of water and reaction product fibers of a high purity (99 mass% or more) can be formed by repeating a typical purification method, that is, water-washing and filtering.

For the purification method in the purification process described above, any device can be used as long as the device can achieve the purpose described above, such as a method utilizing centrifugal dewatering (e.g., continuous decanter). The water dispersion of the reaction product fibers obtained as described above has a solid content (cellulose fiber) concentration in a squeezed state in a range of 10 mass% to 50 mass%. Taking the following dispersing process into consideration, a high solid content concentration of higher than 50 mass% is not preferred because an extremely high energy is required for dispersing.

(3) Dispersing Process (Micronization Treatment Process)

The water-impregnated reaction product (water dispersion) obtained in the purification process described above is subjected to dispersion treatment by dispersing the reaction product in a dispersion medium. The viscosity increases accompanying the treatment, a dispersion of micronization-treated cellulose fibers can be obtained. Note that because breakage in the length direction of the cellulose fibers occurs at the same time as the cellulose fibers are micronized, an aspect ratio of the cellulose fibers can be arbitrarily set by controlling the degree of micronization treatment (e.g., treatment shear force of a dispersing device, treatment pressure, the number of treatment, and treatment period). Thereafter, the cellulose fibers described above may be dried as necessary. As the drying method of the dispersion of the cellulose fibers described above, for example, spray drying, a freeze-drying method, and a vacuum drying method can be used in a case where the dispersion medium is water, and a drying method by a drum dryer and a spray drying method by a spray dryer can be used in a case where the dispersion medium is a mixed solution of water and an organic solvent. Note that the dispersion of the cellulose fibers described above may be used without drying and may be used in the dispersion state.

As the dispersing device used in the dispersing process described above, use of a device that has capability of intense beating, such as a homomixer at a high-speed rotation, a high-pressure homogenizer, an ultrahigh-pressure homogenizer, an ultrasonic dispersion device, a beater, a disk refiner, a conical refiner, a double disk refiner, and a grinder, is preferred because more efficient and high level of downsizing can be performed and water-containing lubricant composition can be obtained economically advantageously. Note that, as the dispersing device described above, for example, a screw mixer, a paddle mixer, a disperser mixer, a turbine mixer, a disper, a propeller mixer, a kneader, a blender, a homogenizer, an ultrasonic homogenizer, a colloid mill, a pebble mill, and a bead mill grinder may be used. Furthermore, a combination of two or more types of dispersing devices may be used.

(4) Reduction Process

In the present invention, the oxidized cellulose nanofibers are preferably further subjected to a reduction reaction after the oxidation reaction process described above. Specifically, micronized oxidized cellulose fibers after the oxidation reaction are dispersed in purified water, pH of the water dispersion is adjusted to approximately 10, and then a reduction reaction is performed by various reducing agents. As the reducing agent to be used in the present invention, an ordinary reducing agent can be used, and preferred examples include $LiBH_4$, $NaBH_3CN$, and $NaBH_4$. Among these, from the viewpoints of cost and usability, $NaBH_4$ is preferred.

The amount of the reducing agent is preferably in a range of 0.1 to 4 mass%, and particularly preferably in a range of 1 to 3 mass%, with respect to the dry weight of the oxidized cellulose nanofibers. The reaction is typically performed at room temperature or a temperature slightly higher than the room temperature typically for 10 minutes to 10 hours, and preferably for 30 minutes to 2 hours.

By the reduction process described above, the aldehyde group and the ketone group contained in the oxidized cellulose nanofibers can be converted into hydroxy groups.

Furthermore, the oxidized cellulose nanofibers having a peak height ratio (C=O/C-O) or (C=O/O-H) in a particular range in an infrared spectrum or having a fiber length in a particular range can be obtained by selection of raw materials, controlling of a reaction period or an added amount of a co-oxidizing agent during cellulose nanofiber oxidation in the production method, controlling of time spent for defiberizing, and the like.

The oxidized cellulose nanofibers satisfying the physical properties of the present invention can be produced by employing the means, methods, and the like described above during the production, and a commercially available product that has the physical properties can be used.

In the present invention, the content of the oxidized cellulose nanofibers contained in the coating liquid can be set to a preferred content based on the use.

For example, in a case of use in an electroconductive paste, an electrode paste for a secondary battery, or an electrode for a secondary battery, from the viewpoint of providing high stability and electrical conductivity performance in a compatible manner and from the viewpoint of viscosity during dispersion production, the content of the oxidized cellulose nanofibers contained in the coating liquid is preferably 0.1 to 2 mass%, more preferably 0.1 to 1.5 mass%, even more preferably 0.1 to 1 mass%, and particularly preferably 0.1 to 0.8 mass%, with respect to the active material amount.

By setting the content of the oxidized cellulose nanofibers to 0.1 mass% or more with respect to the amount of the active material, adequate dispersibility of the coating liquid and cycle characteristics as a battery can be ensured. On the other hand, by setting the content to 2 mass% or less, stability of the dispersion and excellent electrical conductivity can be ensured.

The dispersion medium (the rest of the dispersion) in the coating liquid of the present invention can be water (e.g., purified water, distilled water, pure water, ultrapure water, tap water, and ion exchanged water), and in addition to water, a water-soluble solvent can be also used. Examples of the water-soluble solvent that can be used include at least one selected from alkylene glycols, such as ethylene glycol, triethylene glycol, tetraethylene glycol, propylene glycol, dipropylene glycol, 1,2-propanediol, 1,3-propanediol, 1,2-butanediol, 2,3-butanediol, 1,3-butanediol, 1,4-butanediol, 1,2-pentanediol, 1,5-pentanediol, 2,5-hexanediol, 3-methyl-1,3-butanediol, 2-methylpentane-2,4-diol, 3-methylpentane-1,3,5-triol, and 1,2,3-hexanetriol; polyalkylene glycols, such as polyethylene glycol and polypropylene glycol; glycerols, such as glycerol, diglycerol, and triglycerol; lower alkyl ethers of glycol, such as ethylene glycol monomethyl ether, ethylene glycol monoethyl ether, diethylene glycol monomethyl ether, and diethylene glycol mono-n-butyl ether; N-methyl-2-pyrrolidone; and 1,3-dimethyl-2-imidazolidinone.

In addition, for example, a water-soluble solvent of amides such as dimethylformamide and dimethylacetamide or ketones such as acetone can be mixed.

Although the content of the water-soluble solvent is varied depending on the solid content adjustment of the dispersion, the content is preferably 0.1 to 7 mass% with respect to the total amount of the coating liquid and, from the viewpoint of improving mixability of the slurry and from the viewpoint of storage stability, is more preferably less than 10 mass%, and even more preferably 0.1 to 5 mass%.

The coating liquid of the present invention preferably contains a preservative from the viewpoint of storage stability and from the viewpoint of preventing proliferation of saprophytic bacteria. Furthermore, in addition, an additive based on the use may be added. Examples thereof include sodium carboxymethyl cellulose as a thickener, an antisettling agent, a wetting agent, an emulsifier, an anti-sag agent, an antifoaming agent, a leveling agent, and a plasticizer.

The coating liquid of the present invention preferably has structural resilience. The structural resilience indicates a thixotropic property with viscosity recovery. Specifically, having a thixotropic property and a ratio of structural resilience of 0.75 or more is preferred. As the thixotropic property, when the shear speed is varied from 2.2 $s^{-1}$ to 1000 $s^{-1}$ by using a rotational viscometer, the measured viscosity decreases, and preferably a viscosity at 1000 $s^{-1}$ is 0.2 to 15% of a viscosity at 2.2 $s^{-1}$.

The ratio of structural resilience is a ratio of a slope for the speed decrease with respect to a slope for the speed increase in viscosity measurement chart when the shear speed was making a round-trip change from 2.2 $s^{-1}$ to 1000 $s^{-1}$ in viscosity measurement by a rotational viscometer, and this is preferably 0.75 or more.

More specifically, in the viscosity measurement by a rotational viscometer, the viscosity change of a case where the shear speed of the coating liquid is varied from 2.2 $s^{-1}$ to 1000 $s^{-1}$ by increasing the rotation speed of the rotational viscometer is plotted in a double logarithmic chart, and thus a shear speed-viscosity chart (hereinafter, referred to as the chart) is obtained. Thus, a ratio of the slope for the speed decrease with respect to the slope for the speed increase is calculated. The larger the ratio of the slope for the speed decrease to the slope for the speed is, that is, the closer the viscosity for the speed decrease is to the viscosity for the speed increase, the structural resilience is greater.

The coating liquid to be used is preferably a coating liquid having the ratio of the slope for speed decrease with respect to the slope for the speed increase in viscosity when the shear speed is varied from 2.2 $s^{-1}$ to 1000 $s^{-1}$ of 0.75 or more. The ratio of the slope for the speed decrease with respect to the slope for the speed increase in viscosity when the shear speed is varied from 2.2 $s^{-1}$ to 1000 $s^{-1}$ of 0.75 or more means, when the slope for the speed increase is X and the slope for the speed decrease is Y, a ratio of these slopes (X/Y) being 0.75 or more. The ratio of the slope for the speed decrease with respect to the slope for the speed increase described above is more preferably 0.75 or more and 1.00 or less.

When the ratio of the slope for the speed decrease with respect to the slope for the speed increase described above is 0.75 or more, the viscosity decreases during application by agitation during application or the like, and thus uniform application is facilitated. Furthermore, by allowing the recovery of the viscosity after the application, the film thickness is less likely to be changed until completion of drying of the coated film, and warping of the coated film or unevenness of the coating are less likely to occur.

The oxidized cellulose nanofibers having the ratio of the structural resilience, that is, the ratio of the slope for the speed decrease with respect to the slope for the speed increase, of 0.75 or more can be obtained by selection of raw materials, controlling of a reaction period or an added amount of a co-oxidizing agent during oxidation reaction of cellulose nanofibers, controlling of time spent for defiberizing, and the like in the production.

For the production of the coating liquid of the present invention, for example, the coating liquid can be obtained by charging at least carbon nanotubes, the oxidized cellulose nanofibers having the properties described above, water and, in addition, graphite of flat plate, a water-soluble solvent, a preservative, and the like, agitating and mixing, and then performing dispersing process.

The dispersing treatment of the dispersion described above can be performed by, but not limited to, for example, an ultrasonic dispersing device, a mixer such as a disper, a homomixer, a rotating and revolving mixer, a Henschel mixer, or a planetary mixer, a medium-type dispersing device such as a (high pressure) homogenizer, a paint conditioner, a colloid mill, a bead mill, a cone mill, a ball mill, a sand mill, an attritor, a pearl mill, or a co-ball mill, a medium-free dispersing device such as a wet jet mill or a thin-film spin system high-speed mixer, or other dispersing devices such as a roll mill.

From the viewpoints of stability and dispersing efficiency, preferred dispersing devices are a thin-film spin system high-speed mixer and a bead mill.

Furthermore, to achieve fluidity required for operation, the coating liquid of the present invention has a viscosity (mPa·s) measured at 25°C at a rotation rate of a rotor (1°34' × R24 mm) of 10 rpm by using an E-type rotational viscometer [TV-25, available from Toki Sangyo Co., Ltd.] of preferably 5 to 700, and more preferably 5 to 200.

The coating liquid of the present invention can be used for a coating liquid for electrode layer formation (hereinafter, also referred to as a slurry for an electrode) suitable for production of an electrode (a positive electrode or a negative electrode) of a lithium ion secondary battery. It has uniform dispersion of the carbon nanotubes and the active material that become an electrically conductive material at the time of application for electrode formation is achieved, and excellent dispersion stability is achieved. Furthermore, a composition for an electrode that is suitable for production in a battery electrode such as a lithium ion battery with high efficiency is formed without negatively affecting the resistance value and the like of the electrode itself. The electrode layer obtained by using the coating liquid for electrode layer formation can provide high stability and electrical conductivity performance in a compatible manner while cycle characteristics and self-discharge characteristics are maintained at high levels, and insertion and extraction of an ion such as $Li^+$ and decrease in the resistance value of the electrode are not negatively affected.

Slurry for Positive Electrode

The slurry for a positive electrode is a coating liquid of the present invention containing an active material for a positive electrode.

The active material for a positive electrode that can be used is not particularly limited as long as the active material is a typical positive electrode active material that can be used for a positive electrode of a lithium ion battery (active material that allows reversible insertion and withdrawal of lithium ions) .

Examples thereof include a composite oxide of lithium and a transition metal such as a lithium-nickel composite oxide, a lithium-cobalt composite oxide, a lithium-manganese composite oxide, a lithium-nickel-manganese composite oxide, a lithium-nickel-cobalt composite oxide, a lithium-nickel-aluminum composite oxide, a lithium-nickel-cobalt-aluminum composite oxide, a lithium-nickel-manganese-cobalt composite oxide, a lithium-nickel-manganese-aluminum composite oxide, and a lithium-nickel-cobalt-manganese-aluminum composite oxide, a transition metal sulfide such as $TiS_2$, FeS, and $MoS_2$, a transition metal oxide such as MnO, $V_2O_5$, $V_6O_{13}$, and $TiO_2$, and an olivine-type lithium phosphorus oxide. For example, the olivine-type lithium phosphorus oxide contains at least one element selected from the group consisting of Mn, Cr, Co, Cu, Ni, V, Mo, Ti, Zn, Al, Ga, Mg, B, Nb, and Fe, lithium, phosphorus, and oxygen. These compounds may have some elements partially substituted with other elements to improve the characteristics of the compounds.

The preferred active material for a positive electrode is a lithium-nickel composite oxide, and the lithium-nickel composite oxide is more preferably a lithium-nickel composite oxide represented by a formula: $LiNi_XM1_YM2_ZO_2$ (M1 and M2 are each at least one metal element selected from Al, B, alkali metals, alkaline earth metals, and transition metals, $0.8 \le X \le 1.0$, $0 \le Y \le 0.2$, $0 \le Z \le 0.2$).

One type of these active materials for positive electrodes may be used alone, or two or more types of these active materials for positive electrodes may be used in combination.

In the slurry for a positive electrode of the present invention, from the viewpoint of ensuring a battery capacity and from the viewpoint of ensuring fluidity of the slurry, the content of the active material for a positive electrode described above is preferably 50 to 70 mass%, and more preferably 50 to 63 mass%, with respect to the total amount of the slurry for a positive electrode.

Furthermore, the content of the carbon nanotube is, in terms of solid content, preferably 0.5 to 10 mass%, and more preferably 0.5 to 7 mass%, with respect to the total amount of the slurry for a positive electrode.

In addition to the carbon nanotubes and the active material for a positive electrode, the slurry for a positive electrode of the present invention can optionally contain a solid electrolyte such as a sulfide solid electrolyte, an oxide solid electrolyte, a dry polymer electrolyte, a gel polymer electrolyte, or a quasi solid-state electrolyte.

Slurry for Negative Electrode

The slurry for a negative electrode is a coating liquid of the present invention containing an active material for a negative electrode. As the active material for a negative electrode that can be used, in addition to graphite, an active material having no electrical conductivity can be used without particular limitations and, for example, metal oxide-based active material particles and silicon-based active material particles, especially metal oxide-based negative electrode active material particles, can be used.

For the metal oxide-based negative electrode active material particles, for example, titanium oxide can be used. Titanium oxide is not particularly limited as long as it is capable of occlusion and releasing of lithium. For example, a spinel lithium titanate, a ramsdellite lithium titanate, a titanium-containing metal composite oxide, a titanium dioxide having a crystal structure of a monoclinic system ($TiO_2$ (B)), and an anatase titanium dioxide can be used.

Examples of the spinel lithium titanate include $Li_4+xTisO_{12}$ (x varies in a range of $-1 \le x \le 3$ due to charge and discharge reaction) . Examples of the ramsdellite lithium titanate include $Li_2+yTi_3O_7$ (y varies in a range of $-1 \le y \le 3$ due to charge and discharge reaction). Examples of the $TiO_2$ (B) and the anatase titanium dioxide include $Li_1+zTiO_2$ (z varies in a range of $-1 \le z \le 0$ due to charge and discharge reaction) .

Examples of the titanium-containing metal composite oxide include a metal composite oxide containing Ti and at least one element selected from the group consisting of P, V, Sn, Cu, Ni, and Fe. Examples of the metal composite oxide containing Ti and at least one element selected from the group consisting of P, V, Sn, Cu, Ni, and Fe include $TiO_2$-$P_2O_5$, $TiO_2$-$V_2O_5$, $TiO_2$-$P_2O_5$-$SnO_2$, and $TiO_2$-$P_2O_5$-MeO (Me is at least one element selected from the group consisting of Cu, Ni, and Fe).

Such a metal composite oxide preferably has a low crystallinity and preferably has a microstructure in which a crystal phase and an amorphous phase coexist or an amorphous phase exists alone. By employing the microstructure, cycle performance can be further improved.

In the slurry for a negative electrode of the present invention, from the viewpoint of ensuring a battery capacity and from the viewpoint of ensuring fluidity of the slurry, the content of the active material for a negative electrode described above is preferably 30 to 60 mass%, and more preferably 35 to 55 mass%, with respect to the total amount of the slurry for a negative electrode.

Furthermore, the content of the carbon nanotube is, in terms of solid content, preferably 0.5 to 10 mass%, and more preferably 0.5 to 7 mass%, with respect to the total amount of the slurry for a negative electrode.

In addition to the carbon nanotube dispersion having the composition described above and the active material for a negative electrode, the slurry for a negative electrode of the present invention can optionally contain a solid electrolyte such as a sulfide solid electrolyte, an oxide solid electrolyte, a dry polymer electrolyte, a gel polymer electrolyte, or a quasi solid-state electrolyte.

An electrode for a secondary battery can be obtained by using the slurry for a positive electrode and the slurry for a negative electrode described above.

The slurry for a positive electrode and the slurry for a negative electrode described above preferably further contain a binder. Examples of the binder that can be used include a polyimide-based resin, a fluorine-based resin such as polyvinylidene fluoride (PVdF), polytetrafluoroethylene, a tetrafluoroethylene-hexafluoropropylene-vinylidene fluoride-based copolymer, a hexafluoropropylene-vinylidene fluoride-based copolymer, and a tetrafluoroethylene-perfluorovinyl ether-based copolymer, a polyolefin resin such as polyethylene and polypropylene, polyvinylpyrrolidone, polyvinyl alcohol, a styrene-butadiene rubber (SBR), and an acrylic resin. Two or more types of these binders may be mixed and used.

From the viewpoints of adhesiveness to a current collector foil and battery capacity and charge-discharge characteristics after a cell is formed, the amount of the binder (s) is preferably 0.2 to 3.0 mass%, and more preferably 0.5 to 2.5 mass%, with respect to the total amount of each slurry for an electrode for a secondary battery.

In slurries for an electrode, precipitation may occur because dissolution of the binder, especially a binder component, is hindered. However, the slurry for an electrode of the present invention does not hinder dissolution of the binder.

Furthermore, various solvents may be added to each of the slurries for electrodes described above. Examples of the solvent include water (e.g., purified water, ion exchanged water, distilled water, ultrapure water) , an aromatic solvent, alcohols, polyhydric alcohols, an ether-based solvent, a glycol ether-based solvent, an ester-based solvent, an amine-based solvent, an amide-based solvent, a heterocyclic solvent, a sulfoxide-based solvent, and a sulfone-based solvent. One of these solvents may be used alone or two or more types of these solvents may be mixed and used.

Because the viscosity needs to be appropriate when each slurry for an electrode is applied, the amount of the solvent(s) is preferably 0.5 to 80 mass%, and more preferably 1 to 70 mass%, with respect to the total amount of each slurry for an electrode for a secondary battery. Furthermore, in each of the slurries for electrodes described above, a leveling agent, a solid electrolyte material, or the like can be further appropriately blended in addition to the graphite dispersion for a battery electrode, each of the active materials, and the binder described above in a range that does not impair the effect of the present invention.

Each of the slurries for electrodes for a secondary battery configured as described above can be prepared by using the carbon nanotube dispersion described above, each active material for a positive electrode or a negative electrode for a secondary battery, the binder, the solvent by using a twin-screw kneader, for example.

A desired positive electrode or negative electrode for a lithium ion secondary battery can be obtained by applying each of the obtained slurries for electrodes for a secondary battery on a current collector, which is an electroconductive member of a lithium ion secondary battery, and drying. Thus the present invention can provide slurries for electrodes for a secondary battery and electrodes for a secondary battery that can achieve battery performances of the durability to repeated charging and discharging for a long period of time, .

Example

Examples 1 to 3 and Comparative Example 1

Hereinafter, the present invention will be described using Examples, but the present invention is not limited to these Examples.

As the oxidized cellulose nanofibers (CeNF), the following CeNF-1 and CeNF-2 were used.

Method for Measuring Fiber Length

From the image measured by the transmission electron microscope (H-7650, available from Hitachi High-Tech Corporation; TEM), the fiber lengths of the oxidized cellulose nanofibers were measured, and the proportion of the number of the oxidized cellulose nanofibers having fiber lengths of 50 nm to 250 nm or the number of the oxidized cellulose nanofibers having fiber lengths of 100 nm to 150 nm with respect to the total number was calculated. The number of n was 100. Furthermore, based on the distribution, the number average fiber length L and the length-weighted average fiber length Ll were determined, and the ratio (Ll/L) of the length-weighted average fiber length Ll to the number average fiber length L was calculated.

The measurement results of the fiber lengths of the used oxidized cellulose nanofibers were as follows.

* CeNF-1: The oxidized cellulose nanofibers having fiber lengths of 50 nm to 250 nm was 90%, the oxidized cellulose nanofibers having fiber length of 100 nm to 150 nm was 35%, and the ratio Ll/L of the length-weighted average fiber length Ll to the number average fiber length L was 1.3

* CeNF-2: The oxidized cellulose nanofibers having fiber lengths of 50 nm to 250 nm was 60%, the oxidized cellulose nanofibers having fiber length of 100 nm to 150 nm was 13%, and the ratio Ll/L of the length-weighted average fiber length Ll to the number average fiber length L was 1.6

Method for Measuring Peak Height Ratio (C=O/C-O) of Peak Height Attributed to C=O (Approximately 1610 $cm^{-1}$) to Peak Height Attributed to C-O (Approximately 1062 $cm^{-1}$) and Peak Height Ratio (C=O/O-H) of Peak Height Attributed to C=O (Approximately 1610 $cm^{-1}$) to Peak Height Attributed to O-H (Approximately 3340 $cm^{-1}$) in Infrared Spectrum The cellulose nanofibers that were naturally dried were subjected to infrared spectrum measurement by an infrared spectrophotometer (NICOLET iZ10, available from Thermo SCIENTIFIC). The maximum absorption at a wavelength characteristic to each of the functional groups of the obtained infrared spectrum was taken as a peak, and a ratio of absorption ratios was taken as the peak height ratio.

*CeNF-1: The peak height ratio (C=O/C-O) was 0.61 and the peak height ratio (C=O/O-H) was 1.16
*CeNF-2: The peak height ratio (C=O/C-O) was 0.72 and the peak height ratio (C=O/O-H) was 1.39

Preparation of Carbon Nanotube Dispersion

Predetermined amounts of carbon nanotubes, flat plate-like graphite (J-SP-$\alpha$, available from Nippon Graphite Industries), and the oxidized cellulose nanofibers CeNF-1 or CeNF-2 were added in distilled water, agitation operation was performed by a dispersing device (bead mill using $\varphi$1.0 mm zirconia beads; peripheral speed was set at 10 m/s), and thus a carbon nanotube dispersion was obtained.

Preparation of Coating Liquid for Electrode Layer Formation

In the carbon nanotube dispersion obtained as described above, an active material, a conductive auxiliary, a dispersing agent, and a preservative were added and dispersed by using a dispersing device (bead mill using $\varphi$1.0 mm zirconia beads; peripheral speed was set at 10 m/s). The obtained dispersion was further transferred to a planetary mixer, and a rubber component was added as a binder. This composition was kneaded for 120 minutes at a revolving speed set at 10 rpm, and thus a coating liquid for electrode layer formation was obtained. As the active material, a lithium-titanium oxide was used. As the conductive auxiliary, graphite was used. As the dispersing auxiliary agent, carboxymethyl cellulose was used. As the preservative, an organic nitrogen-sulfur-based compound was used. As the binder, a styrene-butadiene rubber (SBR) was used. The formulation is listed in Table 1.

Method for Measuring Viscosity Slope Ratio (Speed Decrease/Speed Increase)

The viscosity slope ratio (the speed decrease/the speed increase) of the obtained coating liquid was measured as described below.

A rotational viscometer (MCR-102, available from Anton Paar) was used for the coating liquid, and the shear speed was increased from 0.1 $s^{-1}$ to 1000 $s^{-1}$ over 30 seconds by increasing the rotation speed at a fixed rate. When the shear speed reached 1000 $s^{-1}$, the shear speed was immediately decreased from 1000 $s^{-1}$ to 0.1 $s^{-1}$ over 30 seconds. The measurement result was plotted to create a double logarithmic chart having the shear speed ($s^{-1}$) as a horizontal axis and the viscosity (cP ·s) as a vertical axis, and thus a viscosity measurement chart of FIG. 1 was obtained.

In the viscosity measurement chart, the both ends of a part when the shear speed was increased from 2.2 s$^{-1}$ to 1000 s$^{-1}$ (speed increase) were connected by a straight line to determine the slope thereof, and the both ends of a part when the shear speed was decreased from 1000 s$^{-1}$ to 2.2 s$^{-1}$ (speed decrease) were connected by a straight line to determine the slope thereof. Then, the ratio of the slope for the speed decrease with respect to the slope for the speed increase was calculated and used as a ratio of structural resilience of the coating liquid for electrode layer formation containing each of the oxidized cellulose nanofibers (CeNF).

*CeNF-1: The ratio of structural resilience was 0.88
*CeNF-2: The ratio of structural resilience was 0.59

Evaluation of Coating Liquid for Electrode Layer Formation

The obtained coating liquid for electrode layer formation was applied on one face of a PET film (Lumirror #100-T60, Toray Industries, Inc.) by an applicator having a 50 μm gap, then dried at a temperature of 80°C, and thus a film of an electrode layer was obtained.

The basis weight stability (unevenness of thickness) and warping of the obtained film was visually evaluated. A case where no unevenness of thickness or warping of the film was observed was evaluated as A, a case where slight unevenness of thickness or warping of the film was observed was evaluated as B, and a case where significant unevenness of thickness or warping of the film was observed was evaluated as C. The resistance value was measured by using a device including a four-needle probe having a needle interval of 10 mm and a measuring device (milliohm HiTESTER 3227, available from Hioki E.E. Corporation) as a sheet resistance. In a case where the sheet resistance is 1.0 kΩ/□ or less, it is confirmed that excellent electrical conductivity is achieved.

Furthermore, the obtained coating liquid for electrode layer formation was filtered by using a mesh with 50 μm openings. A case where no insoluble matters were found on the mesh was evaluated as A, and a case where insoluble matters were found on the mesh was evaluated as C. The main component of the insoluble matters was an SBR blended as the binder. These evaluation results are indicated in Table 1.

[Table 1]

| | | | | | (part by weight) |
|---|---|---|---|---|---|
| | | Example 1 | Example 2 | Example 3 | Comparative Example 1 |
| Carbon nanotube | CNT-A | 2.0 | 2.0 | - | 2.0 |
| | CNT-B | | - | 2.0 | - |
| Oxidized cellulose nanofiber | CeNF-1 | 1.0 | 1.0 | 0.5 | - |
| | CeNF-2 | - | - | - | 1.0 |
| Conductive auxiliary | Graphite | 2.0 | - | 2.0 | 2.0 |
| Active material | LTO | 40 | 40 | 40 | 40 |
| Dispersing agent | CMC | 1 | 1 | 1 | 1 |
| Preservative | Organic | - | 0.1 | - | - |
| Binder | SBR | 0.6 | 0.6 | 0.6 | 0.6 |
| Water | | Balance | Balance | Balance | Balance |
| Viscosity slope ratio (speed decrease/speed increase) | | 0.88 | 0.88 | 0.90 | 0.59 |
| Coatability | Basis weight stability | A | A | A | B |
| | Warping | A | A | A | C |
| Sheet resistance value (kΩ/□) | | 0.64 | 0.76 | 0.69 | 0.65 |
| Insoluble matter | | A | A | A | C |

As is clear from the evaluation results of Table 1 above, the film obtained by using the coating liquid for electrode layer formation in the scope of the present invention provided coatability and electrical conductivity in a compatible manner at high levels without impairing predetermined properties, and thus was excellent. In contrast, the film obtained by using the coating liquid of Comparative Example 1 lacked evenness.

Industrial Applicability

The coating liquid of the present invention can be used for production of a composition for an electrode (a positive electrode or a negative electrode) of a lithium ion secondary battery.

**Claims**

1. A coating liquid for electrode layer formation comprising a carbon nanotube dispersion coating liquid including at least carbon nanotubes, oxidized cellulose nanofibers, an active material, a binder, and water, wherein the oxidized cellulose nanofibers have a peak height ratio (C=O/C-O) of a peak height attributed to C=O (approximately 1610 cm$^{-1}$) to a peak height attributed to C-O (approximately 1062 cm$^{-1}$) of 0.70 or less, or a peak height ratio (C=O/O-H) of a peak height attributed to C=O (approximately 1610 cm$^{-1}$) to a peak height attributed to O-H (approximately 3340 cm$^{-1}$) of 1.35 or less in an infrared spectrum.

2. The coating liquid according to claim 1, wherein, of the oxidized cellulose nanofibers, 85% or more of the oxidized cellulose nanofibers have a fiber length of 50 to 250 nm.

3. The coating liquid according to claim 1, wherein the coating liquid havs structural resilience.

4. The coating liquid according to claim 1, wherein the coating liquid havs a thixotropic property and a ratio of structural resilience of 0.75 or more.

5. The coating liquid according to claim 1, wherein the binder is a synthetic rubber.

6. A composition for an electrode produced by use of the coating liquid according to any one of claims 1 to 5.

FIG.1

## INTERNATIONAL SEARCH REPORT

International application No.

**PCT/JP2023/039049**

### A. CLASSIFICATION OF SUBJECT MATTER

*H01M 4/62*(2006.01)i; *C09C 1/44*(2006.01)i; *C09D 1/00*(2006.01)i; *C09D 5/02*(2006.01)i; *C09D 5/04*(2006.01)i; *C09D 5/24*(2006.01)i; *C09D 17/00*(2006.01)i; *C09D 101/04*(2006.01)i; *C09D 109/00*(2006.01)i; *H01M 4/04*(2006.01)i; *H01M 4/139*(2010.01)i

FI: H01M4/62 Z; H01M4/139; H01M4/04 Z; C09C1/44; C09D17/00; C09D5/02; C09D5/04; C09D1/00; C09D101/04; C09D5/24; C09D109/00

According to International Patent Classification (IPC) or to both national classification and IPC

### B. FIELDS SEARCHED

Minimum documentation searched (classification system followed by classification symbols)

H01M4/62; C09C1/44; C09D1/00; C09D5/02; C09D5/04; C09D5/24; C09D17/00; C09D101/04; C09D109/00; H01M4/04; H01M4/139

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2021-150214 A (TOSHIBA CORP) 27 September 2021 (2021-09-27) | 1-6 |
| A | CN 105633344 A (SHANGHAI UNIVERSITY) 01 June 2016 (2016-06-01) | 1-6 |
| A | CN 106058150 A (BATTFLEX (WUHAN) TECHNOLOGY CO., LTD.) 26 October 2016 (2016-10-26) | 1-6 |
| P, A | WO 2023/100726 A1 (ZEON CORP) 08 June 2023 (2023-06-08) | 1-6 |
| E, A | WO 2023/210531 A1 (TOAGOSEI CO LTD) 02 November 2023 (2023-11-02) | 1-6 |

☐ Further documents are listed in the continuation of Box C.      ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 January 2024** | **23 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/039049**

| Patent document cited in search report | | | Publication date (day/month/year) | Patent family member(s) | | | Publication date (day/month/year) |
|---|---|---|---|---|---|---|---|
| JP | 2021-150214 | A | 27 September 2021 | US | 2021/0296653 | A1 | |
| CN | 105633344 | A | 01 June 2016 | (Family: none) | | | |
| CN | 106058150 | A | 26 October 2016 | (Family: none) | | | |
| WO | 2023/100726 | A1 | 08 June 2023 | (Family: none) | | | |
| WO | 2023/210531 | A1 | 02 November 2023 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017206412 A
- JP 2020019924 A
- JP 2010254546 A
- JP 2007169120 A
- JP 2021057271 A

### Non-patent literature cited in the description

- Progress report for outsourced performance evaluation of cellulose nanofiber-applied products in 2017 (entrusted business from Ministry of the Environment in 2017). identification of issues for practical use of lithium ion battery for vehicle with start-stop system to which cellulose nanofibers have been applied. DKS Co., Ltd., 16 March 2018